Europäisches Patentamt

(19) European Patent Office

Office européen des brevets

(11) Publication number: **0 112 712**
**B1**

(12)                    EUROPEAN PATENT SPECIFICATION

(45) Date of publication of patent specification: **08.07.87**

(21) Application number: **83307741.5**

(22) Date of filing: **20.12.83**

(51) Int. Cl.⁴: **B 62 D 59/02,** B 62 D 13/00

(54) Articulated vehicle.

(30) Priority: **21.12.82 GB 8236327**

(43) Date of publication of application:
**04.07.84 Bulletin 84/27**

(45) Publication of the grant of the patent:
**08.07.87 Bulletin 87/28**

(84) Designated Contracting States:
**AT BE CH DE FR GB IT LI LU NL SE**

(56) References cited:
**DE-A-2 134 734**
**FR-A-2 518 950**
**US-A-3 454 123**

(73) Proprietor: **Multidrive Limited**
**2, Palmer Road South West Industrial Estate**
**Peterlee Durham SR8 2HU (GB)**

(72) Inventor: **Brown, David Patrick**
**Amberley Parklands Castle Eden**
**Cleveland (GB)**
Inventor: **Brown, John Bowes**
**18 Hallgarth Estate Bowburn**
**County Durham (GB)**

(74) Representative: **Godwin, Edgar James et al**
**MARKS & CLERK 57-60 Lincoln's Inn Fields**
**London, WC2A 3LS (GB)**

Courier Press, Leamington Spa, England.

## Description

This invention relates to an articulated vehicle.

An articulated vehicle conventionally comprises a trailing unit which is pivotally supported at the front by a leading unit. The trailing unit, part of whose weight is carried by the leading unit, is usually referred to as the semi-trailer and may in turn be connected to the full trailer, i.e. a trailer having front and rear axles. In the normal situation in which the leading unit houses the engine and is the only driving unit, it is referred to as the tractor. However, it will be appreciated that there may be circumstances in which it is preferable for the engine to be associated with the trailing unit.

A problem with articulated vehicles is that, during turning, the trailing unit cuts in on the leading unit, i.e. the inside turning radius is considerably smaller than the outside turning radius, so that a large amount of space is needed to manoeuvre the vehicle. This problem becomes worse if a full trailer is attached to a semi-trailer. It would therefore also be desirable to prevent cutting-in by the trailing unit.

The present invention is concerned with an articulated vehicle intended to tackle this problem, comprising: a front sub-chassis and a rear sub-chassis, having at least one drive axle; a main chassis pivotally supported by each sub-chassis; an engine mounted on one of the sub-chassis; and control means for controlling pivoting of the two sub-chassis in relation to the main chassis in such a manner that during turning, the angle between the centre-lines of the two sub-chassis and the centre-line of the main chassis are equal and opposite (See, for example, DE—A—2 134 734.)

The articulated highway truck is recognised as the most economical vehicle for the movement of goods on paved highways. For on/off highway use rigid frame vehicles are considered essential at present, owing to the higher percentage ,of gross weight imposed on the drive axles, which in turn provides better traction to overcome the combination of high rolling resistance coupled with lower wheel adhesion factors.

Thus the vehicle which is the most economical (owing to its high legal and practical payload) is precluded from a very substantial sector of the commercial and military vehicle market because of its inherently low tractive capability on poor surfaces. It is known that articulated vehicles are being marketed with hydrostatic drive to the trailer axles but these have a low performance due to the difficulty of matching the speeds of the direct mechanically driven front axles to those of the hydrostatically driven trailer axles.

It would therefore be desirable to be able to provide a method of driving the axle or axles of an articulated truck's semi-trailer at the same speed as the drive axle or axles of the tractor regardless of steering lock angle between the tractor and semi-trailer.

In accordance with the invention, the vehicle comprises a mechanism for communicating constant velocity power between the sub-chassis, the mechanism comprising an intermediate shaft of variable length extending parallel to the plane containing the pivot axes of the sub-chassis, the intermediate shaft being connected to a front shaft parallel to the centre-line of the front sub-chassis and a rear shaft parallel to the centre-line of the rear sub-chassis, the ends of the intermediate shaft being provided with universal joints which are substantially equidistant from the respective axes of the sub-chassis, the front shaft being supported by a bearing mounted on a frame which is pivotable together with the front sub-chassis about the pivot axis of the front sub-chassis and is also pivotable together with the main chassis about a transverse pivot axis.

Preferred features are disclosed in the subsidiary claims 2 and 3.

Any convenient control means may be used for controlling the pivoting of the sub-chassis, whether mechanical means, hydraulic means, electrical means, or a combination of means.

The invention will be described further, by way of example, with reference to the accompanying drawings, in which:

Figure 1 is a schematic side view of one embodiment of an articulated vehicle;

Figure 2 is a schematic plan view of the vehicle of Figure 1, shown both driving straight-ahead and turning;

Figure 3 is a more detailed schematic side view of another embodiment of the articulated vehicle;

Figure 4 is a more detailed schematic plan view of the vehicle of Figure 3, shown both driving straight-ahead and turning;

Figure 5 is a schematic detail of the articulated vehicle, showing an alternative form of control means for controlling pivoting of the sub-chassis; and

Figures 6 and 7 are views corresponding to Figures 1 and 2, respectively, of another embodiment of the articulated vehicle.

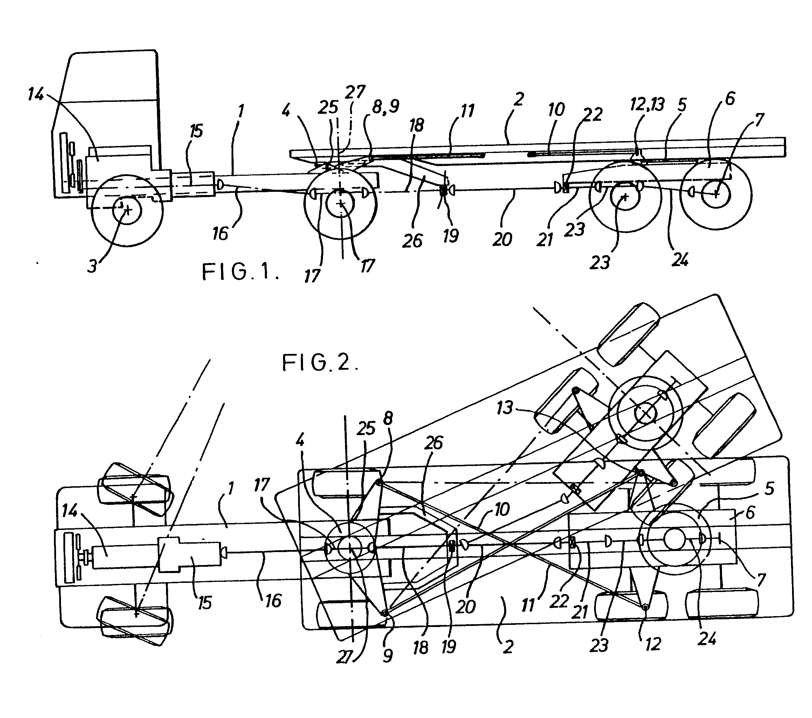

The articulated vehicle illustrated in Figures 1 and 2 comprise a standard or special highway tractor or leading unit which could have 2, 3, 4 or more axles, all or some (or none) of which may be driven. In the present case, there are two axles, only the rear one being driven. A trailing unit or trailer with 1, 2, 3 or more axles, one or more of which may be driven, can rotate about a so-called fifth wheel coupling comprising a transverse pivot 25 and a turntable 4 mounted on the chassis 1 of the tractor, constituting a first sub-chassis of the vehicle; in the present case, there are two axles, both of which are driven. Attached to the rear of the trailer chassis 2, which constitutes the main chassis of the vehicle, is a turntable 5 whose lower section is attached to the second sub-chassis 6 carrying the trailer axles 7, 23. As the tractor steers to left or right of the trailer via its front steering axles 3 so that the centre-line of the tractor sub-chassis 1 rotates through a given angle in relation to the centre-line of the main chassis 2, about the pivot axis 27 of the turntable 4, the centre-line of the trailer sub-chassis 6 is rotated about the pivot axis 30 of the turntable 5 to an equal and opposite angle in relation to the centre-line of the main chassis 2 by suitable control means. This co-ordinated movement can be achieved mechanically (as illustrated) or hydraulically or electrically or by a combination of such means, for example.

In the control means illustrated in Figures 1 and 2 the lower section of the front turntable 4 is extended on either side of the tractor centre-line to pivot 8 and 9 which are joined by tension rods 10 and 11 to pivots 12 and 13 attached to the trailer sub-chassis 6. All the pivots 8 and 9, 12 and 13 are on the same radius from the adjacent turntables 4, 5 and a line drawn at right angles to the rods 10 and 11 which passes through the pivots 8 and 9, 12 and 13 will pass through the axes 27 and 30 of the adjacent turntable 4 and 5.

The engine 14 and transmission 15 are mounted on the first sub-chassis 1 and are connected to both the tractor drive axle and the trailer drive axle. The driven axle groups travel in substantially the same track owing to the control means, and Cardan shafts are arranged so as to impart constant velocity into the trailer axles at any degree of turn, as follows.

A Cardan shaft 16 connects the transmission 15 to a "through drive" axle 17 which can be fitted with an interaxle differential. From the rear of the axle 17 a front Cardan shaft 18 supported by a bearing 19 is connected to an intermediate Cardan shaft 20 which has its Hookes joints equidistant from the pivot axes 27 and 30 of the tractor and trailer turntables 4 and 5. The rear of intermediate Cardan shaft 20 is joined to a rear Cardan shaft 21 which is supported at one end by a bearing 22 and which drives into a "through drive" axle 23 which may also be fitted with an interaxle differential.

A Cardan shaft 24 drives from the axle 23 to the rear axle 7. As there is no vertical movement of the sub-chassis 6 in relation to the main trailer chassis 2, the bearing 22 is rigidly mounted on the sub-chassis 6. As the tractor 1 can vertically rotate (about 15°) in relation to the trailer chassis 2 about the transverse pivot 25 of the fifth wheel coupling, it is necessary that the bearing 19 be able to move up and down whilst remaining on the centre-line of the tractor. This movement is accommodated by mounting the bearing 19 at the end of an A-frame 26 which is connected to the fifth wheel coupling, between the transverse pivot 25 and the turntable 4, so that the frame 26 turns with the tractor but pivots (vertically) with the trailer.

All the Cardan shafts have slip joints to accommodate the vertical movement of the axles in relation to their respective chassis, and in the case of the intermediate Cardan shaft 20 to enable it to lengthen during steering from the central to the maximum steering angle.

If the tractor is fitted with tandem drive axles then a special transfer gear box can transmit the drive equally to the tractor and trailer axles.

It may be desirable to boost the mechanical steering control means hydraulically or electrically to reduce the stress in the rods 10 and 11 and at the same time reduce the steering forces which need to be imposed by the front tyres.

If the distance between the two sub-chassis is sufficiently small, it may be possible to make the ends of the intermediate shaft 20 substantially coincide with the pivot axes 27 and 30 respectively, in which case the frame 26 will not be needed.

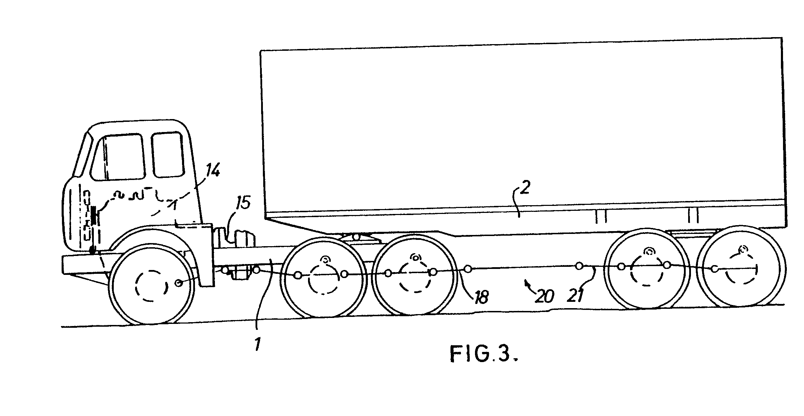

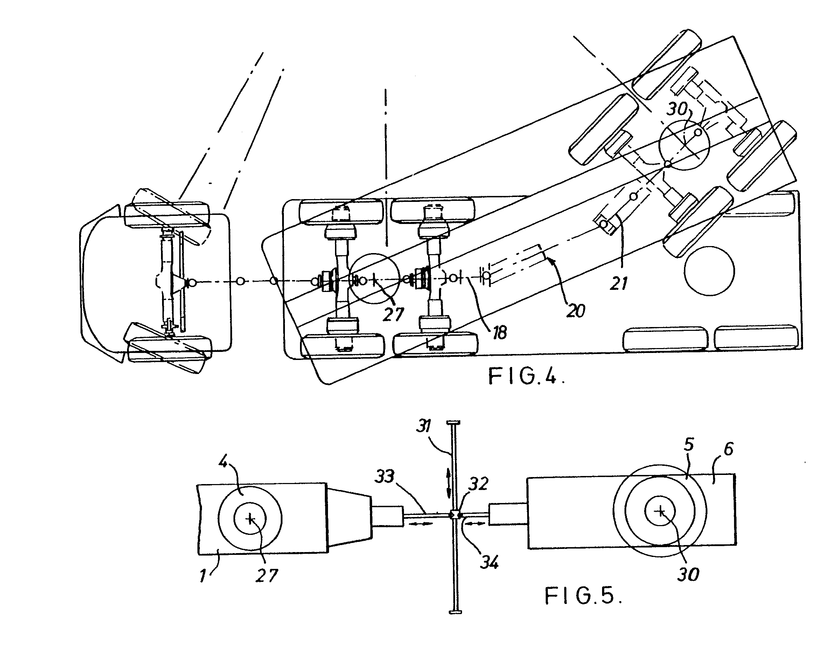

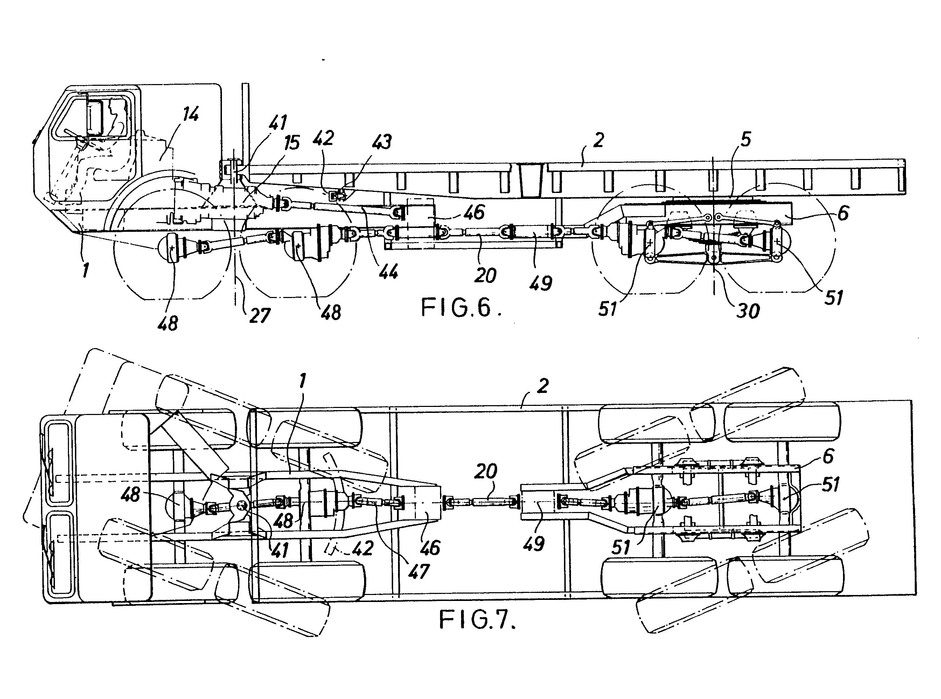

The vehicle illustrated in Figures 3 and 4 is essentially similar to that shown in Figures 1 and 2, except that the tractor has three axles, all of which are driven. The mechanical steering control means, which may be the same as that described above with reference to Figures 1 and 2 or below with reference to Figure 5, as well as the frame 26, has been omitted from Figures 3 and 4 for the sake of clarity.

Figure 5 illustrates an alternative mechanical steering control means, in which a transverse bar 31 fixed to the underside of the trailer chassis 2 carries a sliding bearing 32 which is pivotally connected to two telescopic rods 33 and 34 mounted parallel to the centre-lines of the first sub-chassis 1 and the second sub-chassis 6 respectively. The bar 31 is mid-way between the pivot axes 27 and 30 of the turntables 4 and 5. The operation of the control means may be assisted by a hydraulic ram (not shown) acting on the sliding bearing 32.

In the articulated vehicle shown in Figures 6 and 7 the tractor sub-chassis 1 is connected to the main chassis 2 by a vertical pivot pin 41, defining the pivot axis 27. The sub-chassis 1 is prevented from tilting about a horizontal axis relative to the main chassis 2 by an arcuate guide 42 on the sub-chassis 1 cooperating with a guide roller 43 mounted on the main chassis 2. The rear sub-chassis 6 carries the main chassis 2 by way of the turntable 5 as described above.

A Cardan shaft 44 connects the transmission 15 to a transfer box 46 (also mounted on the front sub-chassis 1) whose output shaft drives, on the one hand, the intermediate shaft 20 and, on the other hand, a Cardan shaft 47 from which drive is transmitted at constant velocity to each of the two front drive axles 48. The Hookes joints of the intermediate shaft 20 are equidistant from the front and rear pivot axes 27 and 30 respectively. The shaft 20 is connected to a shaft 49 mounted on the rear sub-chassis 6, from which drive is transmitted at constant velocity to the two rear axles 51.

Steering is obtained by turning the whole of the tractor about the axis 27 of the pivot pin and at the same time turning the rear sub-chassis 6 through an equal and opposite angle under the control of suitable control means, such as those described above. This may be achieved in any convenient way, for instance by a hydraulic ram acting between either or both of the sub-chassis 1 and 6 and the main chassis 2. If a mechanical control means such as that shown in Figure 5 is used, a hydraulic ram can act between the sliding bearing 32 and the main chassis 2 so as to cause (or at least assist) the turning of the sub-chassis 1 and 6.

The articulated vehicles described above have a number of advantages over conventional articulated and rigid-frame vehicles.

The pivoting of the sub-chassis by the control means counteracts the tendency of the trailing unit to cut in on the leading unit during turning. In other words, the inside turning radius is increased in relation to the outside radius, thereby reducing aisle width requirements, i.e. the space needed to manoeuvre. A further advantage is that a full trailer attached to the rear of the trailing unit does not cut in on the rear of the leading unit but only on the rear of the trailing unit. Thus an articulated vehicle according to the invention towing a full trailer will, when turning, cut in only to the extent that a conventional articulated truck would cut in without such a trailer.

Since the above-mentioned angles between the chassis centre-lines are maintained equal and opposite by the control means, the above-specified positioning of the universal joints of the intermediate shaft ensures that the angle between the front sub-chassis and the intermediate shaft is always equal and opposite to the angle between the rear sub-chassis and the intermediate shaft, this being a requirement for the trouble-free functioning of such a shaft arrangement so that constant velocity power is communicated between the sub-chassis.

The main advantage of the vehicle is that both the front and rear of the main chassis are supported by drive wheels, thereby providing better traction. Since the sub-chassis are turned through equal and opposite angles, the wheels of the rear sub-chassis follow the same track as those of the front sub-chassis, thereby minimising inter-axle "wind-up". Furthermore, since the engine (and associated transmission) is mounted on one of the sub-chassis (in contrast to conventional rigid-frame off-highway vehicles), there is an improvement in lateral stability because, during turning, the engine mass moves towards the inside of the turning circle, thus moving the centre of gravity to counter centrifugal forces.

An embodiment of the vehicle is also possible in which the front sub-chassis carries the engine and only the wheels of the rear sub-chassis are driven. This still provides an advantage over the conventional articulated vehicle, since the major part of the load is borne by the rear wheels, which therefore provide the greater traction.

**Claims**

1. An articulated vehicle comprising: a front sub-chassis (1) and a rear sub-chassis (6) having at least one drive axle (7, 17, 23); a main chassis (2) pivotally supported by each sub-chassis (1, 6); an engine (14) mounted on one of the sub-chassis (1, 6); and control means for controlling pivoting of the two sub-chassis (1, 6) in relation to the main chassis (2) in such a manner that, during turning, the angles between the centre-line of the two sub-chassis (1, 6) and the centre-line of the main chassis (2) are equal and opposite, characterised by a mechanism for communicating constant velocity power between the sub-chassis (1, 6), the mechanism comprising an intermediate shaft (20) of variable length extending parallel to the plane containing the pivot axes (27, 30) of the sub-chassis (1, 6), the intermediate shaft (20) being connected to a front shaft (18) parallel to the centre-line of the front sub-chassis (1) and a rear shaft (21) parallel to the centre-line of the rear sub-chassis (5), the ends of the intermediate shaft (20) being provided with universal joints which are substantially equidistant from the respective axes (27, 30) of the sub-chassis (1, 6), the front shaft (18) being supported by a bearing (19) mounted on a frame (26) which is pivotable together with the front sub-chassis (1) about the pivot axis (27) of the front sub-chassis (1) and is also pivotable together with the main chassis (2) about a transverse pivot axis (25).

2. An articulated vehicle as claimed in claim 1, in which the control means comprises a transverse guide member (31) mounted on the main chassis mid-way between the pivot axes (27, 30) of the sub-chassis (1, 6), the guide member (31) carrying a sliding bearing (32) which is pivotally connected to two telescopic members (32, 33) mounted parallel to the respective centre-lines of the sub-chassis (1, 6).

3. An articulated vehicle as claimed in claim 2, including a hydraulic ram acting on the sliding bearing (32).

**Patentansprüche**

1. Gelenkfahrzeug mit einem vorderen Teilfahrgestell (1) und einem hinteren Teilfahrgestell (6) mit wenigstens einer Antriebswelle (7, 17, 23), einem Hauptfahrgestell (2), das von den beiden Teilfahrgestellen (1, 6) getragen wird und damit schwenkbar verbunden ist, einem Motor (14), der an einem der Teilfahrgestelle (1, 6) befestigt ist, Steuermitteln zur Steuerung der Schwenkbewegung der Teilfahrgestelle (1, 6) relativ zum Hauptfahrgestell (2), derart, daß beim Kurvenfahren die Winkel zwischen der Mittellinie der beiden Teilfahrgestelle (1, 6) und der des Hauptfahrgestelles (2) gleich und entgegengesetzt sind, gekennzeichnet durch einen Mechanismus zur Übertragung von Leistung bei konstanter Geschwindigkeit zwischen den Teilfahrgestellen (1, 6), welcher eine Zwischenwelle (20) variabler Länge umfaßt, die parallel zur die Schwenkachsen (27, 30) der Teilfahrgestelle (1, 6) enthaltenden Ebene verläuft, wobei die Zwischenwelle (20) mit einer zur Mittellinie des vorderen Teilfahrgestells (1) parallelen Frontwelle (18) und einer zur Mittellinie des hinteren Teilfahrgestells (6) parallelen hinteren Welle (21) verbunden ist und die Enden der Zwischenwelle mit Kardangelenken versehen sind, welche von den Achsen (27, 30) der Teilfahrgestelle (1 bis 6) gleichen Abstand haben, und wobei die Frontwelle (18) von einem Lager (19) getragen ist, welches auf einem Rahmen (26) befestigt ist, der zusammen mit dem vorderen Teilfahrgestell (1) um dessen Schwenkachse (27) und zusammen mit dem Hauptfahrgestell (2) um eine Querachse (25) schwenkbar ist.

2. Gelenkfahrzeug nach Anspruch 1, in welchem die Steuermittel einen auf dem Hauptfahrgestell (2) mittig zwischen den Schwenkachsen (27, 30) der Teilfahrgestelle (1, 6) quer verlaufenden Führungsteil (3) umfassen, der ein Gleitlager (32) trägt, welches schwenkbar mit zwei Teleskopeinrichtungen (32, 33) verbunden ist, welche parallel zu den Mittellinien der Teilfahrgestelle (1 bis 6) verlaufen.

3. Gelenkfahrzeug nach Anspruch 2, dadurch gekennzeichnet, daß auf die Gleitführung (32) ein hydraulischer Druckkolben einwirket.

**Revendications**

1. Véhicule articulé comprenant: un sous-châssis avant (1) et un sous-châssis arrière (6) ayant au moins un essieu moteur (7, 17, 23); un châssis principal (2) supporté de façon pivotante par chaque sous-châssis (1, 6); un moteur (14) monté sur l'un des sous-châssis (1, 6); et des moyens de commande pour commander le pivotement des deux sous-châssis (1, 6) par rapport au châssis principal (2) de manière que, lors d'un virage, les angles entre les axes médians des deux sous-châssis (1, 6) et l'axe médian du châssis principal (2) soient égaux et de sens opposé, caractérisé en ce qu'un mécanisme transmet entre les sous-châssis (1, 6) une puissance assurant une vitesse égale aux essieux de ces sous-châssis, le mécanisme comportant un arbre intermédiaire (20) de longueur variable parallèle au plan contenant les axes de pivotement (27, 30) des sous-châssis (1, 6) l'arbre intermédiaire (20) étant relié à un arbre avant (18) parallèle à l'axe médian du sous-châssis avant (1) et à un arbre arrière (21) parallèle à l'axe médian du sous-châssis arrière (6), les extrémités de l'arbre intermédiaire (20) étant équipées de joints universels pratiquement équidistants des axes de pivotement respectifs (27, 30) des sous-châssis (1, 6), l'arbre avant (18) étant supporté par un palier (19) monté sur un bâti (26) qui peuvent pivoter avec le sous-châssis avant (1) autour de l'axe de pivotement (27) du sous-châssis avant (1) et peut également pivoter avec le châssis principal (2) autour d'un axe de pivotement transversal (25).

2. Véhicule articulé selon la revendication 1, dans lequel les moyens de commande comportent un élément de guidage transversal (31) monté sur le châssis principal à mi-distance entre les axes de pivotement (27, 30) des sous-châssis (1, 6), l'élément de guidage (31) portant un palier coulissant (32) qui est raccordé de façon pivotante à deux éléments télescopiques (32, 33) parallèles aux axes médians respectifs des sous-châssis (1, 6).

3. Véhicule articulé selon la revendication 2, comportant un vérin hydraulique agissant sur le palier coulissant (32).

FIG.1.

FIG.2.

0 112 712

FIG.3.

0 112 712

FIG.4.

FIG.5.

0 112 712

FIG.6.

FIG.7.

4